# EUROPEAN PATENT APPLICATION

(11) **EP 2 529 968 A1**
(43) Date of publication of application: **05.12.2012**
(21) Application number: 11167384.4
(22) Date of filing: 25.05.2011
(51) Int. Cl.: B60K 15/00, B60K 15/01, F02M 31/125, F02M 31/18, F02G 5/02

(54) **A method of using fuel in transportation means for reduction of fuel consumption and carbon emission**

(71) Applicant: Wu, Wen-Chen, New Taipei City 235, Chinese Taipei (TW)
(72) Inventor: Wu, Wen-Chen, New Taipei City 235, Chinese Taipei (TW)
(74) Representative: Horak, Michael

(57) **Abstract**

A method of using fuel in transportation means comprises: (a) providing a heat treatment unit (1) in the transportation means, the heat treatment unit (1) including a through pipe (11) provided with an inlet (12) and an outlet (13) at two ends thereof; (b) providing a heat source for the heat treatment unit (1) capable of supplying the through pipe (11) with heat; (c) connecting a fuel tank (22) of the transportation means to the inlet (12) of the through pipe (11) in the heat treatment unit (1); and (d) connecting an engine (23) of the transportation means to the outlet (13) of the through pipe (11) in the heat treatment unit (1); whereby fuel contained in the fuel tank (22) is fed through the heat treatment unit (1) to enter the engine (23), the fuel can be vaporized in the through pipe (11) by the heat source before entering the engine (23) to facilitate fuel vaporization so that fuel consumption and carbon emission can be reduced.

## Description

### (a) Technical Field of the Invention

The present invention relates to a method of using fuel in transportation means for reduction of fuel consumption and carbon emission and, more particular, to a method that enables the fuel to be vaporized before entering an engine of the transportation means to facilitate the fuel vaporization to have the engine achieve a complete combustion so that the fuel consumption and the carbon emission can be reduced.

### (b) Description of the Prior Art

According to the experiments of engine combustion, about 80 % of fuel fed to an engine of transportation means, such as a vehicle, a vessel, an aircraft and so on, still remains a liquid state so that it is difficult for the engine to achieve a complete combustion. As commonly known, an engine of transportation means generally has a combustion efficiency of about 30 %. The unburned fuel is exhausted into the ambient environment. This not only wastes energy but also creates air pollution, which has a bad effect on environment protection. Although there are some fuel-saving products available in the market, they cannot cause an engine to have a complete combustion and thus the effect of fuel reduction is lower than the expected.

If the fuel is pre-heated to a predetermined temperature before entering an engine, the combustion efficiency can be improved. The improvement of the combustion efficiency is generally proportional to the amount of the heat provided for fuel before it enters the engine. The higher the temperature of the fuel is pre-heated, the more the combustion efficiency will arrive at.

In view of the forgoing, based on the long-term experiences of engine combustions and after constant efforts on the development and innovation of the associated products, the applicant has contrived a method to reduce the fuel consumption and carbon emission for transportation means, which in turn contributes to the environmental protection.

### SUMMARY OF THE INVENTION

The primary object of the present invention is to provide a method of using fuel in transportation means for reduction of fuel consumption and carbon emission, whereby the fuel can be vaporized before entering an engine of the transportation means to facilitate the fuel vaporization to have the engine achieve a complete combustion so that the fuel consumption and the carbon emission can be reduced.

The method comprises the steps of: (a) providing a heat treatment unit in the transportation means, the heat treatment unit including a through pipe provided with an inlet and an outlet at two end thereof; (b) providing a heat source for the heat treatment unit capable of supplying the through pipe with heat; (c) connecting a fuel tank of the transportation means to the inlet of the through pipe in the heat treatment unit; and (d) connecting an engine of the transportation means to the outlet of the through pipe in the heat treatment unit; whereby fuel fed from the fuel tank of the transmission means can flow through the heat treatment unit to enter the engine of the transmission means, the fuel can be vaporized in the through pipe via the heat source before entering the engine of the transmission means to facilitate fuel vaporization so that fuel consumption and carbon emission can be reduced.

In the aforementioned method, the through pipe extends in a snake-like way through a main body of said heat treatment unit to increase the time of fuel retained in said heat treatment unit to have the fuel reach a predetermined temperature.

In the aforementioned method, the heat source is an electrical heating element connected with a battery or generator of the transportation means.

In the aforementioned method, the electrical heating element is an electrical heating wire or electrical ceramic heater or the like.

In the aforementioned method, the heat source is an exhaust pipe of the transmission means, and the through pipe is looped around the exhaust pipe so as to receive heat from the exhaust pipe.

Other objects, advantages, and novel features of the present invention will become more apparent from the following detailed description when taken in conjunction with the accompanying drawings.

### BRIEF DESCRIPTION OF THE DRAWINGS

FIG 1 shows a schematic structure of an embodiment of the present invention.
FIG 2 is a schematic view showing the present invention applied in a vehicle.
FIG 3 is a schematic view showing an operation condition of the present invention.
FIG 4 shows a schematic structure of another embodiment of the present invention.

### DETAILED DESCRIPTION OF THE PREFERRED EMBODIMENTS

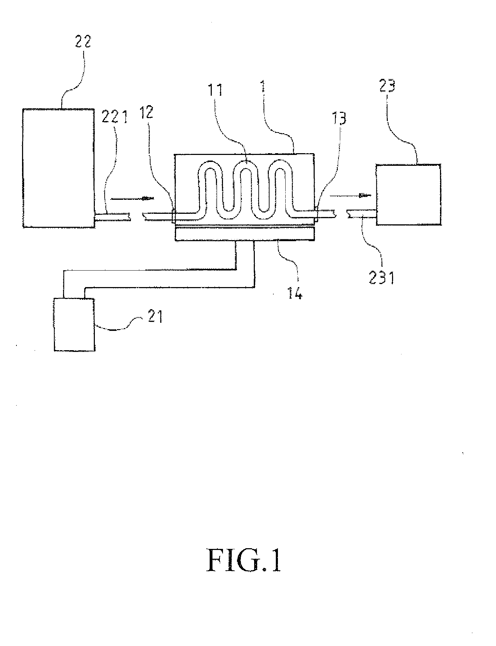

FIG 1 shows a schematic structure of an embodiment f the present invention for illustrating a method of using fuel in transmission means, such as a vehicle, a vessel, an aircraft or the like. As shown, the embodiment comprises a heat treatment unit 1 that generally includes a main body and an electrical heating element 14, in which a through pipe 11 is defined in the main body with a snake-like configuration and provided with an inlet 12 and an outlet 13 respectively at two ends thereof, and the electrical heating element 14 is placed in contact with the main body for providing heat for the through pipe 11, the electrical heating element 14 being an electrical heating wire, an electrical ceramic heater or the like.

In the heat treatment unit 1, the electrical heating element 14 is connected with a battery (or generator) 21 of the transporting means, a tank 22 of the transporting means is connected to the inlet 12 of the main body via a pipe 221, and an engine 23 of the transporting means is connected to the outlet 13 of the main body via a pipe 231. In such arrangement, the fuel fed from the tank 22 can be vaporized in the through pipe 11 by the electrical heating element 14 before entering the engine 23. This arrangement allows the fuel to be vaporized more quickly to enable the engine 23 to have a complete combustion so that the fuel consumption and the carbon emission can be reduced.

To make sure the vaporization effect of fuel, the applicant has conducted a test in which fuel was heated to a temperature under which combustion efficiency is measured. The test results are as follows:
1. For gasoline, when the temperature is below 160 °C, the combustion efficiency has no significant change.
2. For gasoline, when the temperature is above 180 °C, the liquid fuel can convert into mist of fuel by breaking the intermolecular bonds. The combustion efficiency has an increase of more than 60 % as compared with the original efficiency. The combustion efficiency will have a significant change for every increase of 10° C of the fuel temperature thereafter. The combustion efficiency can be further increased so as to reduce the fuel consumption and the carbon emission.
3. For gasoline, when the temperature is above 230 °C, the liquid fuel can be vaporized into gaseous fuel, and the combustion efficiency can come to an increase of more than 95 % as compared with the original efficiency.
4. For gasoline, when the temperature is above 260 °C, the liquid fuel can be fully vaporized into gaseous fuel, and the combustion efficiency can come to an increase of more than 300 % as compared with the original efficiency.
5. For diesel oil, when the temperature is above 230 °C, the liquid fuel can convert into mist of fuel by breaking the intermolecular bonds. The combustion efficiency has an increase of more than 60 % as compared with the original efficiency.
6. For diesel oil, when the temperature is above 380 °C, he liquid fuel can be vaporized into gaseous fuel.

According to the above test, when gasoline is heated to 260 °C, the combustion efficiency can come to an increase of more than 300 % as compared with the original efficiency. In such condition, the liquid fuel can be fully vaporized into gaseous fuel before entering the engine of the transportation means. Such method will enable fuel to vaporize more quickly in an engine, thereby causing the engine to have a complete combustion, which in turn brings a reduction of fuel consumption and carbon emission.

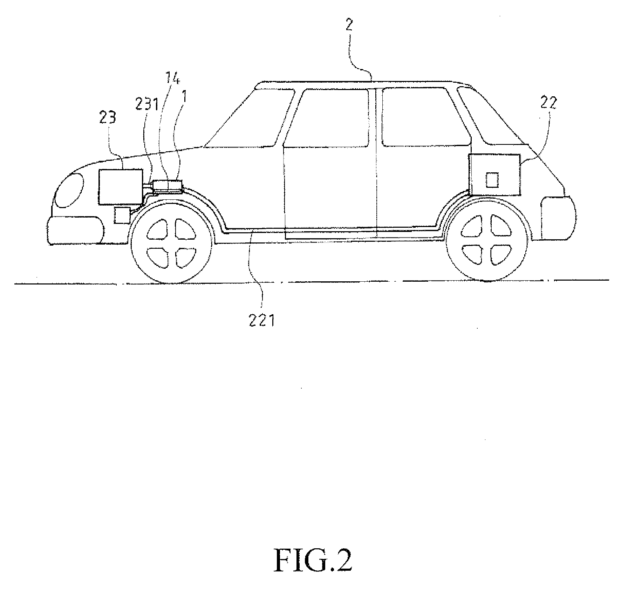

FIG 2 shows an application of the present invention applied in a vehicle 2. As shown, a heat treatment unit 1 is mounted at a suitable location of the vehicle 2, the electrical heating element 14 is connected with a battery (or generator) 21 of the vehicle 2, the fuel tank 22 at rear of the vehicle 2 is connected to the inlet 12 of the through pipe 11 of the main body in the heat treatment unit 1 via a pipe 221, the engine 23 of the vehicle 2 is connected to the outlet 13 of the through pipe 11 of the main body in the heat treatment unit 1 via a pipe 231. In such arrangement, the fuel contained in the tank 22 is fed through the heat treatment unit 1 to enter the engine 23 rather than being directly fed to the engine 23. Therefore, the fuel can be pre-heated by the heat treatment unit 1 before entering the engine 23.

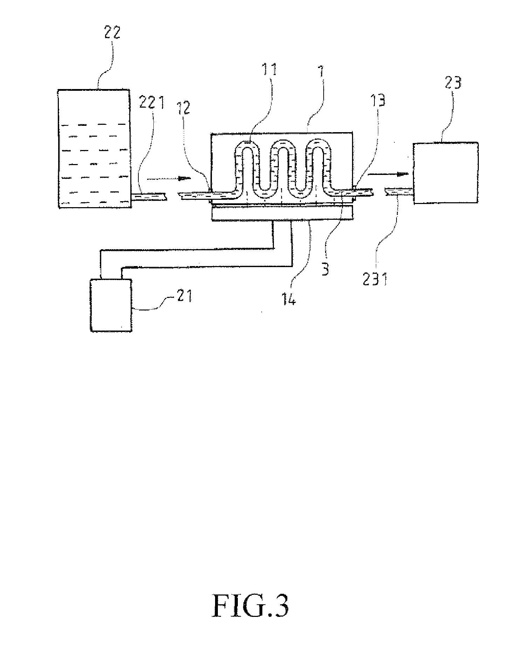

FIG 3 shows an operation condition of the present invention. The following will illustrate the operation of the present invention with reference to FIG 3 in conjunction with FIG 2. As shown, when the vehicle 2 starts, the fuel 3 contained in the fuel tank 22 will first flow into the heat treatment unit 1, in which the fuel 3 can be pre-heated by the electrical heating element 14 connected with the battery (or generator) 21, the electrical heating element 14 being triggered to function at the same time the vehicle is started; after a pre-heat provided from the heat treatment unit 1, the fuel 3 enters the engine 23 of the vehicle 2. The snake-like configuration of the through pipe 11 extending through the main body can increase the time of fuel retained in the through pipe 11 to have the fuel 3 heated to a predetermined temperature. Thus, the fuel 3 can be vaporized in the through pipe 11 before entering the engine 23 of the vehicle 2. Such method can help the fuel 3 to vaporize more quickly in an engine, which in turn causes the engine 23 to achieve a complete combustion. As commonly known, an engine of a vehicle generally has a combustion efficiency of about 30 %. After employing the method of the present invention, the combustion efficiency can have an increase of about 100 % or more as compared with the original efficiency, and thus the carbon emission of the vehicle can decrease correspondingly. This method of using fuel will help an engine to achieve a maximum working efficiency

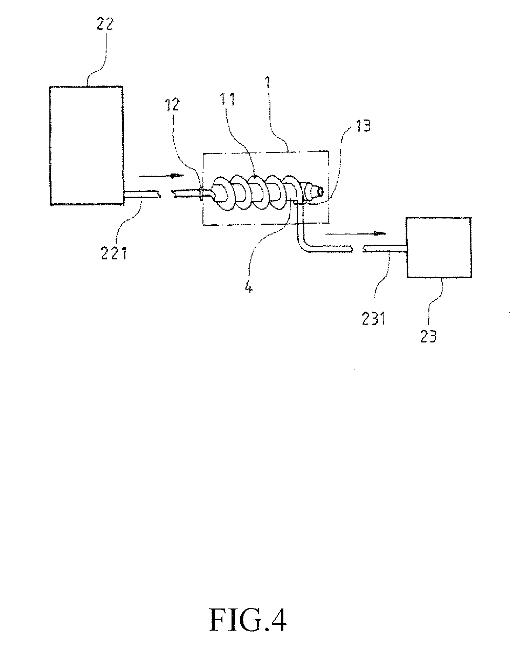

FIG 4 shows a schematic structure of another embodiment of the present invention. As shown, the heat treatment unit 1 may include a through pipe 11 looped around an exhaust pipe 4 or other heat source. The through pipe 11 is provided with an inlet 12 and an outlet 13 respectively at two ends thereof. The fuel tank 22 of the vehicle 2 is connected to the inlet 12 of the through pipe 11 in the heat treatment unit 1 via a pipe 221, the engine 23 of the vehicle 2 is connected to the outlet 13 of the through pipe 11 in the heat treatment unit 1 via a pipe 231. When the vehicle 2 starts, the fuel 3 contained in the fuel tank 22 will first flow into the heat treatment unit 1, in which the fuel 3 will be pre-heated by the exhaust pipe 4, the temperature of which can reach about 600 °C; after a pre-heat provided from the heat treatment unit 1, the fuel 3 enters the engine 23 of the vehicle 2. In such arrangement, the fuel 3 can be vaporized in the through pipe 11 before entering the engine 23. Such method can help the fuel to vaporize more quickly in an engine to have the engine 23 achieve a complete combustion so as to reduce the fuel consumption and the carbon emission.

In view of the foregoing, the present invention provides a method of using fuel in transmission means for reduction of fuel consumption and carbon emission, wherein a heat treatment unit is employed. The method can be applied in vehicles, vessels, aircrafts and so on, whereby fuel can be vaporized in the heat treatment before entering to an engine of transmission means, so that the fuel can be vaporized more quickly in the engine and the combustion can proceed more completely in the engine so as to achieve a reduction of fuel consumption and carbon emission. It is believed that the present invention containing novel features and useful functions.

Although the present invention has been described with a certain degree of particularity, it is understood that the present disclosure is made by way of example only and the combination and arrangement of parts may be resorted to without departing from the spirit and scope of the invention hereinafter claimed.

## Claims

1. A method of using fuel in transportation means for reduction of fuel consumption and carbon reduction, comprising the steps of:
(a) providing a heat treatment unit (1) in the transportation means, said heat treatment unit (1) including a through pipe (11) provided with an inlet (12) and an outlet (13) at two end thereof;
(b) providing a heat source for said heat treatment unit (1) capable of supplying said through pipe (11) heat;
(c) connecting a fuel tank (22) of the transportation means to said inlet (12) of said through pipe (11) in said heat treatment unit (1); and
(d) connecting an engine (23) of the transportation means to said outlet (13) of said through pipe (11) in said heat treatment unit (1);
whereby fuel contained in the fuel tank (22) of the transmission means is fed through said heat treatment unit (1) to enter the engine (23) of the transmission means, the fuel can be vaporized in said through pipe (11) via the heat supplied from said heat source before entering the engine (23) of the transmission means to facilitate fuel vaporization so that fuel consumption and carbon emission can be reduced.

2. The method of claim 1, wherein said through pipe (11) extends in a snake-like way through a main body of said heat treatment unit (1) to increase the time of fuel retained in said heat treatment unit (1) to have the fuel reach a predetermined temperature.

3. The method of claim 2, wherein said heat source is an electrical heating element (14) connected with a battery or generator (21) of the transportation means.

4. The method of claim 3, wherein said electrical heating element (14) is an electrical heating wire or electrical ceramic heater.

5. The method of claim 1, wherein said heat source is an exhaust pipe (4) of the transmission means, said through pipe (11) is looped around said exhaust pipe (4) so as to receive heat from said exhaust pipe (4).
